# EUROPÄISCHE PATENTANMELDUNG

(11) **EP 4 455 550 A1**
(43) Veröffentlichungstag der Anmeldung: **30.10.2024**
(21) Anmeldenummer: 24168007.3
(22) Anmeldetag: 02.04.2024
(51) Int. Cl.: F21V 8/00, G02F 1/13357

(54) **ANZEIGEEINHEIT UND ELEKTRISCHES GERÄT**

(30) Priorität: 27.04.2023 BE 202305331
(71) Anmelder: Miele & Cie. KG, 33332 Gütersloh (DE)
(72) Erfinder: Schneider, Daniel, 33415 Verl (DE)

(57) **Zusammenfassung**

Die Erfindung betrifft eine Anzeigeeinheit, aufweisend
- eine Anzeigezelle (1);
- einen flächigen Lichtleiter (2), der stapelförmig mit der Anzeigezelle (1) angeordnet ist und eingerichtet und ausgebildet ist, Licht in Richtung der Anzeigezelle (1) und/oder von der Anzeigezelle (1) weg in Richtung einer Reflektorschicht (4) zu emittieren;
- mindestens ein Leuchtelement (3), das ausgebildet und angeordnet ist, um bei Betrieb in den flächigen Lichtleiter (2) Licht einzukoppeln; und
- ein zusätzliches Hinterleuchtungselement (8), das angeordnet, dimensioniert und ausgebildet ist, die Anzeigezelle (1) zusätzlich zum Lichtleiter (2) partiell zu hinterleuchten.

Ferner betrifft die Erfindung ein elektrisches Gerät, das die Anzeigeeinheit aufweist.

## Beschreibung

Die Erfindung betrifft eine Anzeigeeinheit und ein elektrisches Gerät. Anzeigeeinheiten elektrischer Geräte werden zunehmend größer ausgebildet, während gleichzeitig Grenzwerte für einen Standby-Verbrauch und dgl. abnehmen. Daher besteht bei den größer werdenden Anzeigeeinheiten das Problem, dass eine Leistungsaufnahme für einen Betrieb in dem Standby-Modus und/oder Energiesparmodus in Bezug auf die Grenzwerte zu groß ist.

Um eine partielle Hinterleuchtung zu erreichen, besteht die Möglichkeit eines sogenannten Local dimming, bei dem die gesamte Anzeigeeinheit von einer Vielzahl von Leuchtelementen hinterleuchtet wird, die jeweils nur in Bereichen aktiv sind, in denen etwas dargestellt werden soll, während sie in weiteren Bereichen inaktiv sind, in denen nichts dargestellt werden soll. Diese Möglichkeit ist jedoch sehr kostenintensiv.

Der Erfindung stellt sich somit das Problem, eine Anzeigeeinheit und ein elektrisches Gerät bereitzustellen, bei denen die Anzeigeeinheit mit einer geringen Leistungsaufnahme partiell betrieben werden kann. Zudem soll die Anzeigeeinheit kostengünstig sein.

Erfindungsgemäß wird dieses Problem durch eine Anzeigeeinheit mit den Merkmalen des Patentanspruchs 1 und ein elektrisches Gerät mit den Merkmalen des Patentanspruchs 8 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Bereitstellung einer Anzeigeeinheit mit einer partiellen Hinterleuchtung und geringen Leistungsaufnahme darin, dass diese nur mit geringen optischen Verlusten und somit besonders sparsam hinsichtlich der erforderlichen Leistungsaufnahme umgesetzt ist. Es ist nicht erforderlich, dass eine Lebensdauer des mindestens einen Leuchtelements zum vollständigen Hinterleuchten der Anzeigezelle für einen Dauerbetrieb dimensioniert ist. Damit geht ein Kostenvorteil einher. Zudem wird relativ für die Integration des zusätzlichen Hinterleuchtungselements relativ wenig Bauraum benötigt.

Die Erfindung betrifft eine Anzeigeeinheit, aufweisend
- eine Anzeigezelle;
- einen flächigen Lichtleiter, der stapelförmig mit der Anzeigezelle angeordnet, eingerichtet und ausgebildet ist, Licht in Richtung der Anzeigezelle und/oder von der Anzeigezelle weg in Richtung einer Reflektorschicht zu emittieren;
- mindestens ein Leuchtelement, das ausgebildet und angeordnet ist, um bei Betrieb in den flächigen Lichtleiter Licht einzukoppeln; und
- ein zusätzliches Hinterleuchtungselement, das angeordnet, dimensioniert und ausgebildet ist, die Anzeigezelle zusätzlich zum Lichtleiter partiell zu hinterleuchten.

Nicht einschränkende Beispiele für eine Anzeigezelle können ein Display, eine TFT-Zelle, eine LCD-Zelle etc. sein.

Das mindestens eine Leuchtelement ist bevorzugt als Leuchtdiode ausgebildet und seitlich zu dem Stapel aus Anzeigezelle und flächigem Lichtleiter angeordnet. Der flächige Lichtleiter ist bevorzugt partikelgefüllt und/oder strukturiert, um eine homogene Beleuchtung der Anzeigefläche zu unterstützen. Die Partikel und/oder die Strukturierung des Lichtleiters sorgen für eine hinreichend gleichmäßige Streuung des eingekoppelten Lichtes. Das mindestens eine Leuchtelement und der flächige Lichtleiter sind bevorzugt angeordnet und ausgebildet, die Anzeigefläche der Anzeigezelle vollflächig zu beleuchten.

In einer bevorzugten Ausführungsform weist die Anzeigeeinheit weiterhin ein Gehäuse auf, das die Anzeigezelle, den Lichtleiter und das mindestens eine Leuchtelement derart einhaust, dass eine Seite der Anzeigeeinheit zumindest teilweise von dem Gehäuse unbedeckt ist, wobei das Gehäuse eine Öffnung aufweist, in der das zusätzliche Hinterleuchtungselement angeordnet ist. Diese Öffnung ist gegenüberliegend zu der zumindest teilweise unbedeckten Seite positioniert. Der Stapel der Anzeigeeinheit, der neben der Anzeigezelle und dem Lichtleiter weitere Schichten und/oder Komponenten aufweisen kann, wird daher bei Betrieb aus dem zusätzlichen Hinterleuchtungselement durch die Öffnung partiell beleuchtet. Dadurch ist der Wirkungsgrad der gesamten Anzeigeeinheit verbessert, weil für die partielle Beleuchtung weniger Energie benötigt wird.

Das Gehäuse kann beispielsweise aus einem dünnen Blech bestehen, so dass es auch eine Kühlfunktion für das mindestens eine Leuchtelement ausübt. Die zusätzliche Öffnung des Gehäuses kann eine beliebige Größe und Form aufweisen. Die Kombination runder und/oder eckiger Randabschnitte der Öffnung richtet sich nach den zu erfüllenden partiellen Beleuchtungs-Anforderungen der Anzeigeeinheit.

Bevorzugt ist das zusätzliche Hinterleuchtungselement als Reflektor und/oder als Lichtkasten ausgebildet, dem oder denen mindestens ein weiteres Leuchtelement zugeordnet ist, so dass das mindestens eine weitere Leuchtelement bei Betrieb den Reflektor und/oder den Lichtkasten beleuchtet. Die Anzahl der weiteren Leuchtelemente hängt vom Abstand zwischen dem mindestens einen weiteren Leuchtelement und der Anzeigezelle, von einer Größe des partiell zu beleuchtenden Hinterleuchtungsbereichs und von Eigenschaften des mindestens einen weiteren Leuchtelements ab. Eine Farbe des mindestens eines weiteren Leuchtelements ist beliebig. Eine weitere Reduzierung der Leistungsaufnahme der Anzeigeeinheit durch Wahl einer geeigneten Farbe des mindestens einen weiteren Leuchtelements ist möglich.

Bevorzugt weist die Anzeigeeinheit weiterhin die Reflektorschicht und eine oder mehrere Streu- und/oder Mikrooptikschichten auf, wobei diese Schichten zusammen mit der Anzeigezelle und dem Lichtleiter den Stapel bilden, der in dem Gehäuse eingehaust ist. Die Reflektorschicht kann als Folie ausgebildet sein. Die Reflektorschicht ist bevorzugt hinsichtlich ihrer Transmission optimiert. Dadurch wird gewährleistet, dass die Leistungsaufnahme der Anzeigeeinheit gering ist.

In einer bevorzugten Ausführungsform ist das zusätzliche Hinterleuchtungselement als der Lichtkasten ausgebildet und enthält der Lichtkasten das mindestens eine weitere Leuchtelement. Das mindestens eine Leuchtelement ist bevorzugt auf einem Schaltungsträger des Lichtkastens angeordnet.

Bevorzugt ist das mindestens eine weitere Leuchtelement derart angeordnet, dass es das zusätzliche Hinterleuchtungselement bei Betrieb direkt beleuchtet. Alternativ bevorzugt ist das mindestens eine weitere Leuchtelement derart angeordnet, dass es das zusätzliche Hinterleuchtungselement bei Betrieb indirekt beleuchtet. Dies wird dadurch realisiert, dass der Lichtstrahl des mindestens einen Leuchtelements umgelenkt wird, wobei bevorzugt das zusätzliche Hinterleuchtungselement entsprechend ausgebildet ist. Die indirekte Beleuchtung weist den Vorteil auf, dass durch die Umlenkung und/oder Vergleichmäßigung in dem zusätzlichem Hinterleuchtungselement wie z.B. dem Reflektor ein relativ geringer Bauraum erforderlich ist. Zudem wird eine unerwünschte Spotbildung des mindestens einen weiteren Leuchtelement vermieden.

In einer bevorzugten Ausführungsform ist das zusätzliche Hinterleuchtungselement als ein weiterer Lichtleiter ausgebildet. Dadurch wird in Richtung des Schichtaufbaus der Anzeigeeinheit nur wenig weiterer Bauraum benötigt. Der weitere Lichtleiter ist bevorzugt partikelgefüllt und/oder strukturiert, um eine homogene partielle Hinterleuchtung der Anzeigeeinheit zu unterstützen. Bevorzugt ist der weitere Lichtleiter in ein weiteres Gehäuse eingehaust, derart, dass dieser Licht in eine gewünschte, vorbestimmte Richtungen leitet.

Bevorzugt weist der weitere Lichtleiter zusätzliche Umlenkflächen und/oder Lichtleitergeometrien auf, um einen räumlichen Versatz in mehrere Raumrichtungen zu überbrücken. Dadurch wird eine indirekte Beleuchtung realisiert mit dem Vorteil, dass durch die Umlenkung in dem zusätzlichen Lichtleiter ein geringerer Bauraum erforderlich ist. Zudem wird eine Spotbildung des mindestens einen Leuchtelements vermieden.

Die Anzeigeeinheit weist bevorzugt weiterhin, eine oder mehrere Streufolien, Mikrooptiken und/oder Treiberkomponenten auf. Wenn erforderlich, kann die Anzeigeeinheit nicht nur einen, sondern auch mehrere Bereiche aufweisen, die jeweils entsprechend einer oder mehrerer der vorstehend beschriebenen Ausführungsformen partiell hinterleuchtet werden.

Die Erfindung betrifft weiterhin ein elektrisches Gerät, das eine Anzeigeeinheit nach einer oder mehreren der vorstehend beschriebenen Ausführungsformen enthält.

In einer bevorzugten Ausführungsform weist das elektrische Gerät weiterhin eine Leiterkarte auf, die der Anzeigeeinheit zugeordnet ist und die das mindestens eine weitere Leuchtelement aufweist.

Ein Ausführungsbeispiel der Erfindung ist in den Figuren rein schematisch dargestellt und wird nachfolgend näher beschrieben. Es zeigt schematisch und nicht maßstabsgerecht
- Fig. 1: eine Teil-Querschnittsansicht einer Anzeigeeinheit gemäß Stand der Technik;
- Fig. 2: eine Teil-Querschnittsansicht einer Anzeigeeinheit gemäß einer ersten Ausführungsform;
- Fig. 3: eine Teil-Querschnittsansicht einer Anzeigeeinheit gemäß einer zweiten Ausführungsform;
- Fig. 4: eine Teil-Querschnittsansicht eines elektrischen Geräts gemäß einer ersten Ausführungsform;
- Fig. 5: eine Teil-Querschnittsansicht eines elektrischen Geräts gemäß einer zweiten Ausführungsform;
- Fig. 6: eine Teil-Querschnittsansicht eines elektrischen Geräts gemäß einer dritten Ausführungsform;
- Fig. 7: eine perspektivische Teil-Ansicht des in Fig. 6 gezeigten elektrischen Geräts;
- Fig. 8: eine perspektivische Teil-Ansicht eines elektrischen Geräts gemäß einer vierten Ausführungsform; und
- Fig. 9: eine Teil-Querschnittsansicht eines elektrischen Geräts gemäß einer fünften Ausführungsform.

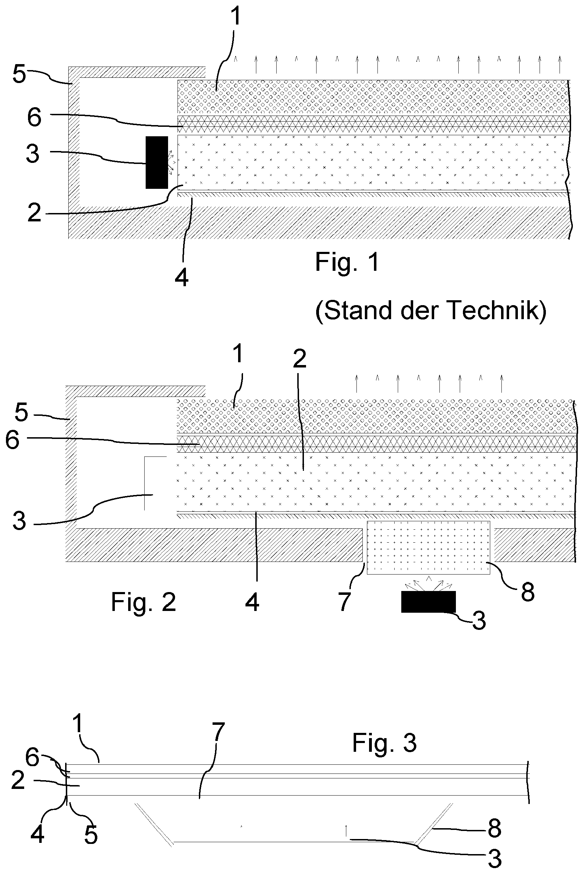

Fig. 1 zeigt eine Teil-Querschnittsansicht einer Anzeigeeinheit gemäß Stand der Technik. Die Anzeigeeinheit weist in genannter Reihenfolge übereinander gestapelt auf: eine Anzeigezelle 1, eine oder mehrere Streu-/Mikrooptikfolien 6, einen flächigen Lichtleiter 2 und eine Reflektorschicht 4. Der Lichtleiter 2 ist ausgebildet, Licht in Richtung der Anzeigezelle 1 und/oder von der Anzeigezelle 1 weg in Richtung der Reflektorschicht 4 zu emittieren. Die Anzeigeeinheit weist ferner mindestens ein Leuchtelement 3 auf, das ausgebildet und angeordnet ist, um bei Betrieb in den flächigen Lichtleiter 2 Licht einzukoppeln, wie durch Pfeile angedeutet. Die Anzeigeeinheit weist weiterhin ein Gehäuse 5 auf, das die Anzeigezelle 1, die Streu-/Mikrooptikfolie(n) 6, den flächigen Lichtleiter 2, die Reflektorschicht 4 und das mindestens eine Leuchtelement 3 derart einhaust, dass eine Seite der Anzeigeeinheit zumindest teilweise von dem Gehäuse 5 unbedeckt ist.

Bei Betrieb koppelt das mindestens eine Leuchtelement 3 Licht in den Lichtleiter 2 ein, so dass Licht aus dem Stapel heraus auf der von dem Gehäuse zumindest teilweise unbedeckten Seite flächig austritt. Dies ist durch die Pfeile verdeutlicht.

Fig. 2 zeigt eine Teil-Querschnittsansicht einer Anzeigeeinheit gemäß einer ersten Ausführungsform. Die in Fig. 2 gezeigte Anzeigeeinheit entspricht der in Fig. 1 gezeigten Anzeigeeinheit mit dem Unterschied, dass das Gehäuse 5 eine Öffnung 7 und ein zusätzliches Hinterleuchtungselement 8 aufweist, das in dieser Öffnung 7 angeordnet ist. Die Öffnung 7 ist gegenüberliegend zu der zumindest teilweise von dem Gehäuse unbedeckten Seite angeordnet. Das zusätzliche Hinterleuchtungselement 8 ist positioniert, dimensioniert und ausgebildet, die Anzeigezelle 1 zusätzlich zum Lichtleiter 2 partiell zu hinterleuchten. Das zusätzliche Hinterleuchtungselement 8 ist als ein Reflektor ausgebildet und weist mindestens ein weiteres Leuchtelement 3 auf, das angeordnet und ausgebildet ist, einen Reflektor zu beleuchten, wie durch die dargestellten Pfeile verdeutlicht wird.

Bei Betrieb beleuchtet das mindestens eine weitere Leuchtelement 3 das zusätzliche Hinterleuchtungselement 8, so dass Licht durch den Stapel partiell hindurchtritt und die Anzeigezelle 1 partiell beleuchtet, wie durch Pfeile angedeutet. Wenn das mindestens eine Leuchtelement 3 in Betrieb ist, was hier nicht gezeigt ist, koppelt es Licht in den Lichtleiter 2 ein, so dass aus dem Stapel heraustretendes Licht die Anzeigezelle 1 vollflächig hinterleuchtet, wie es in Fig. 1 gezeigt ist.

Fig. 3 zeigt eine Teil-Querschnittsansicht einer Anzeigeeinheit gemäß einer zweiten Ausführungsform. Die in Fig. 3 gezeigte Anzeigeeinheit entspricht der in Fig. 2 gezeigten Anzeigeeinheit mit dem Unterschied, dass das zusätzliche Hinterleuchtungselement 8 als ein Lichtkasten ausgebildet ist, der das mindestens eine weitere Leuchtelement 3 enthält. In dieser Ausführungsform kommen rein beispielhaft zwei weitere Leuchtelemente zum Einsatz und sind auf einem Schaltungsträger angeordnet.

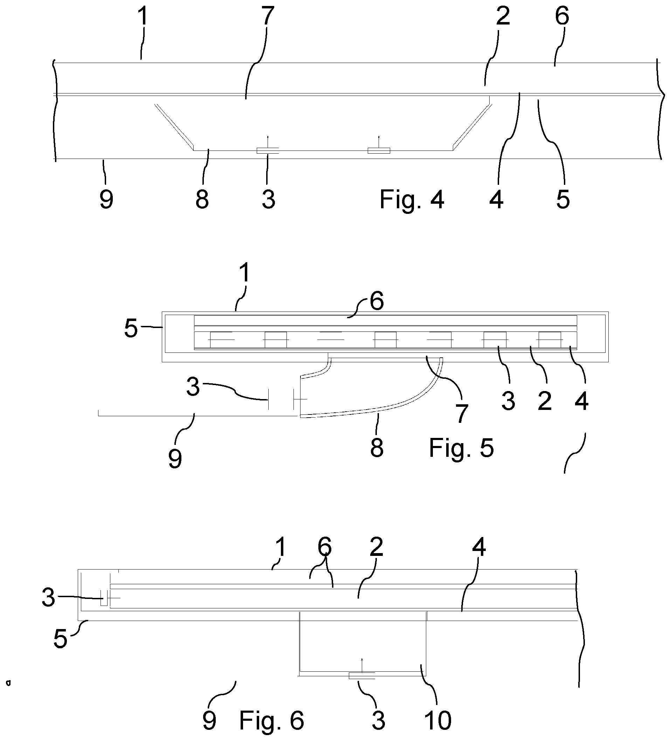

Fig. 4 zeigt eine Teil-Querschnittsansicht eines elektrischen Geräts gemäß einer ersten Ausführungsform. Das elektrische Gerät weist eine Leiterkarte 9 und eine Anzeigeeinheit auf, die der in Fig. 3 gezeigten Anzeigeeinheit entspricht, mit dem Unterschied, dass das mindestens eine weitere Leuchtelement 3 nicht Teil des zusätzlichen
Hinterleuchtungselements 8 in Form des Lichtkastens, sondern Teil der Leiterkarte 9 ist. Das mindestens eine Leuchtelement 3 ist auf der Leiterkarte 9 angeordnet. Die Anzeigeeinheit ist auf dem mindestens einen Leuchtelement 3 und auf der Leiterkarte 9 angeordnet. Die Vervollständigung des Hinterleuchtungsaufbaus muss bei diesem Aufbaukonzept nicht zwingend beim Displayhersteller erfolgen. Die Vervollständigung kann alternativ auch erst bei der Montage der Einzelkomponenten in die Blendenbaugruppe (o.ä.) erfolgen (z.B. im Gerätewerk).

Fig. 5 zeigt eine Teil-Querschnittsansicht eines elektrischen Geräts gemäß einer zweiten Ausführungsform. Das in Fig. 5 gezeigte elektrische Gerät weist eine Leiterkarte 9 und eine Anzeigeeinheit auf, die der in Fig. 2 gezeigten Anzeigeeinheit entspricht, mit dem Unterschied, dass das mindestens eine weitere Leuchtelement 3 nicht Teil des zusätzlichen Hinterleuchtungselements 8 in Form des Reflektors, sondern Teil der Leiterkarte 9 ist und dass das mindestens eine weitere Leuchtelement 3 derart angeordnet ist, dass es das zusätzliche Hinterleuchtungselement 8 bei Betrieb indirekt beleuchtet. Das zusätzliche Hinterleuchtungselement 8 ist entsprechend ausgebildet, um das eintretende Licht umzulenken.

Fig. 6 zeigt eine Teil-Querschnittsansicht eines elektrischen Geräts gemäß einer dritten Ausführungsform. Das in Fig. 6 gezeigte elektrische Gerät entspricht dem in Fig. 4 gezeigten elektrischen Gerät mit dem Unterschied, dass das zusätzliche Hinterleuchtungselement 8 als weiterer Lichtleiter ausgebildet ist, der von einem weiteren Gehäuse 10 umgeben ist, so dass der weitere Lichtleiter eingekoppeltes Licht in vorbestimmte Richtungen leitet.

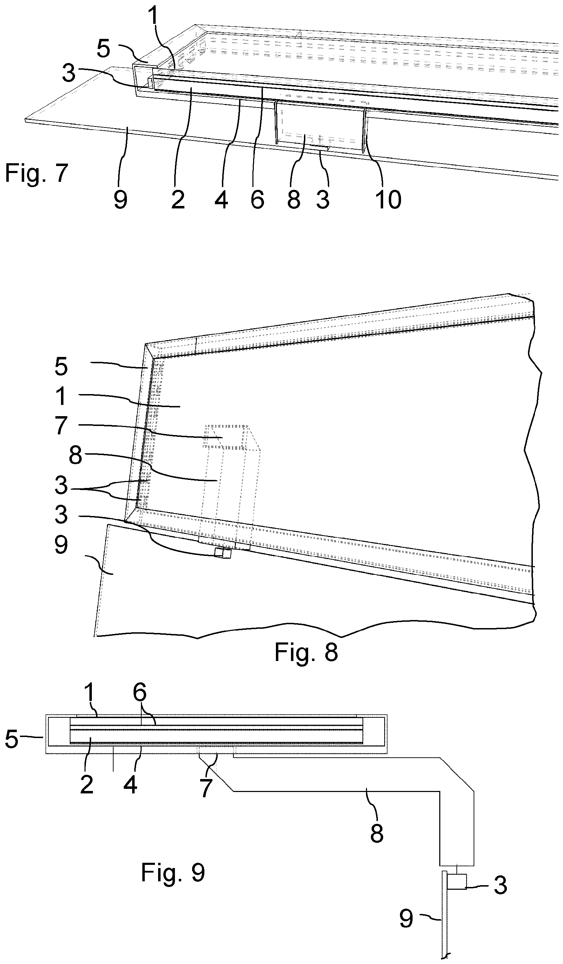

Fig. 7 zeigt eine perspektivische Teil-Ansicht des in Fig. 6 gezeigten elektrischen Geräts. Das zusätzliche Hinterleuchtungselement 8 in Form des weiteren Lichtleiters ist von dem Gehäuse 10 eingehaust, so dass das auf der Leiterkarte 9 angeordnete, weitere Leuchtelement 3 bei Betrieb den weiteren Lichtleiter beleuchtet und das in den weiteren Lichtleiter eingekoppelte Licht durch den Stapel aus der Reflektorschicht 4, dem Lichtleiter 2, der Streu-/Mikrooptikfolie 6 und der Anzeigezelle 1 zumindest teilweise hindurchtritt und eine partielle Beleuchtung der Anzeigezelle 1 bewirkt.

Fig. 8 zeigt eine perspektivische Teil-Ansicht eines elektrischen Geräts gemäß einer vierten Ausführungsform. Das in Fig. 8 gezeigte elektrische Gerät entspricht dem in Fig. 7 gezeigten elektrischen Gerät mit dem Unterschied, dass das zusätzliche Hinterleuchtungselement 8 in Form des weiteren Lichtleiters angeordnet und ausgebildet ist, das eingekoppelte Licht umzulenken und dass das weitere Leuchtelement 3 versetzt zu der Anzeigeeinheit angeordnet ist. Der weitere Lichtleiter weist zusätzliche Umlenkflächen und/oder Lichtleitergeometrien auf. Der Übersichtlichkeit halber ist das weitere Gehäuse in dieser Darstellung weggelassen.

Fig. 9 zeigt eine Teil-Querschnittsansicht eines elektrischen Geräts gemäß einer fünften Ausführungsform. Das in Fig. 9 gezeigte elektrische Gerät entspricht dem in Fig. 8 gezeigten elektrischen Gerät mit dem Unterschied, dass das zusätzliche Hinterleuchtungselement 8 in Form des weiteren Lichtleiters ausgebildet ist, eingekoppeltes Licht zweimal umzulenken. Der weitere Lichtleiter weist dazu zusätzliche Umlenkflächen und/oder entsprechend wirkende Lichtleitergeometrien auf.

### Bezugszeichenliste

- 1: Anzeigezelle
- 2: Lichtleiter
- 3: Leuchtelement
- 4: Reflektorschicht
- 5: Gehäuse
- 6: Streufolie, Mikrooptikfolie
- 7: Öffnung
- 8: Hinterleuchtungselement
- 9: Leiterkarte
- 10: weiteres Gehäuse

## Patentansprüche

1. Anzeigeeinheit, aufweisend
- eine Anzeigezelle (1);
- einen flächigen Lichtleiter (2), der stapelförmig mit der Anzeigezelle (1) angeordnet ist und eingerichtet und ausgebildet ist, Licht in Richtung der Anzeigezelle (1) und/oder von der Anzeigezelle (1) weg in Richtung einer Reflektorschicht (4) zu emittieren;
- mindestens ein Leuchtelement (3), das ausgebildet und angeordnet ist, um bei Betrieb in den flächigen Lichtleiter (2) Licht einzukoppeln; und
- ein zusätzliches Hinterleuchtungselement (8), das angeordnet, dimensioniert und ausgebildet ist, die Anzeigezelle (1) zusätzlich zum Lichtleiter (2) partiell zu hinterleuchten.

2. Anzeigeeinheit nach Anspruch 1, **gekennzeichnet durch** ein Gehäuse (5), das die Anzeigezelle (1), den Lichtleiter (2) und das mindestens eine Leuchtelement (3) derart einhaust, dass eine Seite der Anzeigeeinheit zumindest teilweise von dem Gehäuse (5) unbedeckt ist, wobei das Gehäuse (5) eine Öffnung (7) aufweist, in der das zusätzliche Hinterleuchtungselement (8) angeordnet ist und die gegenüberliegend zu der zumindest teilweise unbedeckten Seite angeordnet ist.

3. Anzeigeeinheit nach Anspruch 1, **gekennzeichnet durch** ein Gehäuse (5), das die Anzeigezelle (1), den Lichtleiter (2) und das mindestens eine Leuchtelement (3) derart einhaust, dass eine Seite der Anzeigeeinheit zumindest teilweise von dem Gehäuse (5) unbedeckt ist, wobei das Gehäuse (5) eine Vertiefung in Form eines Reflektors oder Lichtkastens aufweist, in der das zusätzliche Hinterleuchtungselement (8) angeordnet ist und die gegenüberliegend zu der zumindest teilweise unbedeckten Seite angeordnet ist, wobei in der Vertiefung optional ein zusätzlicher Lichtleiter angeordnet sein kann.

4. Anzeigeeinheit nach Anspruch 2, **dadurch gekennzeichnet, dass** das zusätzliche Hinterleuchtungselement (8) als Reflektor und/oder als Lichtkasten ausgebildet ist, dem oder denen mindestens ein weiteres Leuchtelement (3) zugeordnet ist, so dass das mindestens eine weitere Leuchtelement (3) bei Betrieb den Reflektor und/oder den Lichtkasten beleuchtet.

5. Anzeigeeinheit nach Anspruch 4, **dadurch gekennzeichnet, dass** das zusätzliche Hinterleuchtungselement (8) als der Lichtkasten ausgebildet ist und dass der Lichtkasten das mindestens eine weitere Leuchtelement (3) enthält.

6. Anzeigeeinheit nach einem der vorangehenden Ansprüche, **dadurch gekennzeichnet, dass** das mindestens eine weitere Leuchtelement (3) derart angeordnet ist, dass es das zusätzliche Hinterleuchtungselement (8) bei Betrieb indirekt beleuchtet.

7. Anzeigeeinheit nach Anspruch 1, 2 oder 6, **dadurch gekennzeichnet, dass** das zusätzliche Hinterleuchtungselement (8) als ein weiterer Lichtleiter ausgebildet ist.

8. Anzeigeeinheit nach Anspruch 7, **dadurch gekennzeichnet, dass** der weitere Lichtleiter zusätzliche Umlenkflächen und/oder Lichtleitergeometrien aufweist, um einen räumlichen Versatz in mehrere Raumrichtungen zu überbrücken.

9. Elektrisches Gerät, aufweisend eine Anzeigeeinheit nach einem der vorangehenden Ansprüche.

10. Elektrisches Gerät nach Anspruch 9, **gekennzeichnet durch** eine Leiterkarte (9), die der Anzeigeeinheit zugeordnet ist und die das mindestens eine weitere Leuchtelement (3) aufweist.
